(19) Europäisches Patentamt / European Patent Office / Office européen des brevets

(11) **EP 3 134 301 B1**

(12) **EUROPÄISCHE PATENTSCHRIFT**

(45) Veröffentlichungstag und Bekanntmachung des Hinweises auf die Patenterteilung:
**26.08.2020   Patentblatt 2020/35**

(21) Anmeldenummer: **15719648.6**

(22) Anmeldetag: **21.04.2015**

(51) Int Cl.:
**B60T 8/1755** $^{(2006.01)}$

(86) Internationale Anmeldenummer:
**PCT/EP2015/058580**

(87) Internationale Veröffentlichungsnummer:
**WO 2015/162121 (29.10.2015 Gazette 2015/43)**

(54) **VERFAHREN ZUR ERMITTLUNG EINES OFFSETS EINES INERTIALSENSORS**

ASCERTAINING AN OFFSET OF AN INERTIAL SENSOR

PROCÉDÉ DE DÉTERMINATION D'UN DÉCALAGE D'UN CAPTEUR INERTIEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2014   DE 102014207628**

(43) Veröffentlichungstag der Anmeldung:
**01.03.2017   Patentblatt 2017/09**

(73) Patentinhaber: **Continental Teves AG & Co. OHG
60488 Frankfurt am Main (DE)**

(72) Erfinder:
• **ZHANG, Chen
  60439 Frankfurt am Main (DE)**
• **LEVRIER, Julien
  71638 Ludwigsburg (DE)**

(56) Entgegenhaltungen:
**EP-A1- 2 535 724          WO-A2-2005/039955
DE-A1-102011 003 298**

EP 3 134 301 B1

**Beschreibung**

Die Erfindung betrifft ein Verfahren gemäß Oberbegriff von Anspruch 1 und ein elektronisches Steuergerät gemäß Oberbegriff von Anspruch 9.

Das Fahrverhalten von Kraftfahrzeugen, insbesondere von kommerziell genutzten Fahrzeugen zum Transport von Lasten, kann beträchtlich durch den Beladungszustand beeinflusst werden. Daher sind bereits verschiedene Verfahren zur Schätzung der Fahrzeugmasse bekannt geworden, welche nur die Signale der für eine Fahrdynamikregelung vorhandenen Sensoren verwenden. Betrachtet man die Fahrzeuglängsdynamik während eines Beschleunigungsvorgangs, so kann eine Kräftebilanz ausgewertet und die Fahrzeugmasse als Quotient aus der Differenz zwischen antreibenden und abbremsenden Kräften im Zähler sowie der resultierenden Beschleunigung im Nenner berechnet werden.

Um den Einfluss einer Steigung bei der Fahrzeugmassenschätzung zu berücksichtigen, ist es aus der DE 10 2006 012 246 A1 bekannt, die Längsbeschleunigung mit einem Beschleunigungssensor zu messen. Ein Offset bzw. eine additive Verschiebung des Längsbeschleunigungssignals kann allerdings in einer deutlichen Abweichung zwischen tatsächlicher und geschätzter Fahrzeugmasse resultieren. Weiterhin beeinträchtigt ein Offset des Längsbeschleunigungssensors die Funktion einer Berganfahrhilfe, da diese im Allgemeinen den Haltedruck nach Maßgabe der gemessenen Steigung bzw. Hangabtriebskraft einstellt.

Eine additive Verschiebung bzw. ein Offset des Längsbeschleunigungssignals kann beispielsweise auf Grund eines schiefen Einbaus des Sensors, einer Temperaturänderung oder einer asymmetrischen Beladung des Fahrzeugs auftreten. Während ein schief eingebauter Sensor ein konstantes bzw. permanentes Offset verursacht, führen Temperaturänderungen bzw. eine geänderte Beladung zu schwankenden bzw. zeitlich veränderlichen Offsets. Hierbei kann der Temperatureinfluss beispielsweise anhand einer Kennlinie korrigiert werden, wenn ein Temperatursensor vorhanden ist.

In der WO 2005/101031 A1 ist ein Verfahren zur Offsetkompensation des elektrischen Signals eines Sensors (insbesondere eines Beschleunigungssensors) beschrieben, bei dem ein Kompensationswert während der Lebensdauer des Sensors langfristig nachgeführt wird, wobei die Nachführung in Abhängigkeit des durch das Fahrzeug zurückgelegten Wegs durchgeführt wird. Basierend auf der Annahme, dass eine Mittelwertbildung über hinreichend viele Messwerte bzw. eine hinreichend lange Strecke eine Steigung von Null ergibt, kann somit ein permanentes oder langsam veränderliches Offset (z.B. durch Alterung des Sensors) korrigiert werden. Der Einfluss einer von Fahrt zu Fahrt geänderten Beladung kann mit diesem Verfahren nicht berücksichtigt werden.

Aus der DE 10 2005 025 851 B1 ist ein Verfahren zur Erkennung einer Änderung der Gewichtsverteilung in einem Fahrzeug bekannt, bei dem nach dem Ausschalten der Zündung ein erster Wert für die Fahrzeugneigung ermittelt wird, nach dem Einschalten der Zündung ein zweiter Wert für die Fahrzeugneigung ermittelt wird, und anhand eines Vergleichs von erstem und zweiten Wert für die Fahrzeugneigung eine Änderung der Gewichtsverteilung im Fahrzeug detektiert wird. Mittels dieses Verfahrens wird also nur das Offset ermittelt, welches durch die während des letzten Fahrzeugstillstands erfolgte Zuladung verursacht wird. Somit ist nicht sichergestellt, dass ein aktuell vorliegendes Offset hinreichend kompensiert wird.

Ein weiteres Beispiel eines bekannten Verfahrens zur Schätzung eines Längsbeschleunigungsoffsets ist in der EP 2 535 724 A1 beschrieben.

Die Aufgabe der vorliegenden Erfindung besteht darin, ein nur auf der in einem Fahrdynamikregelsystem vorhandenen Sensorik aufbauendes Verfahren zur Ermittlung einer additiven Verschiebung des Längsbeschleunigungssensorsignals anzugeben, welches die Nachteile der oben genannten Verfahren vermeidet.

Diese Aufgabe wird erfindungsgemäß durch ein Verfahren gemäß Anspruch 1 gelöst.

Eine additive Verschiebung eines von einem Inertialsensor gemessenen Längsbeschleunigungssignals eines fahrenden Kraftfahrzeugs wird ermittelt, indem zumindest das Längsbeschleunigungssignal, ein Bremssignal und ein Antriebssignal erfasst werden, und indem eine Kräftebilanz der Längsdynamik des Kraftfahrzeugs ausgewertet wird, wobei die Signale sowohl bei mindestens einem Beschleunigungs- als auch bei mindestens einem Bremsvorgang erfasst werden, wobei die Signale bei Beschleunigungsvorgängen getrennt von den Signalen bei Bremsvorgängen erfasst und/oder ausgewertet werden, und wobei die additive Verschiebung aus einem Vergleich der bei Beschleunigungsvorgängen erfassten Signale oder daraus berechneten Werte mit den bei Bremsvorgängen erfassten Signalen oder daraus berechneten Werten ermittelt wird. Der Inertialsensor mit einer beweglich gelagerten Prüfmasse kann insbesondere in Form eines mikro-elektro-mechanischen Systems realisiert sein.

Ein erfindungsgemäßes Verfahren hat den Vorteil, dass kein Fahrzeugstillstand erforderlich ist, um die additive Verschiebung des Längsbeschleunigungssignals zu ermitteln. Unter Verwendung der ohnehin vorhandenen Sensorik eines Fahrdynamikregelsystems können unabhängig vom Steigungswinkel der Fahrbahn und unabhängig davon, ob das Kraftfahrzeug ein manuelles Schaltgetriebe oder ein Automatikgetriebe aufweist, die aktuell auftretenden Störeinflüsse auf das Längsbeschleunigungssignal, wie insbesondere eine asymmetrische Beladung, ermittelt und kompensiert werden. Auch ein durch Temperatureffekte verursachte Verschiebung kann berücksichtigt bzw. kompensiert werden. Somit wird beispielsweise die Genauigkeit einer Massenschätzung deutlich erhöht.

Zweckmäßigerweise erfolgt eine Auswertung der Kräftebilanz der Längsdynamik nur dann, wenn ein stabiler Fahrzustand erkannt wird. Dies verhindert, dass eine ermittelte Verschiebung durch schwer zu berücksichtigende Einflüsse, wie z.B. ein durch Eingreifen einer Bremsschlupfregelung beeinträchtigtes Geschwindigkeitssignal, verfälscht wird.

Besonders zweckmäßig ist es, wenn der stabile Fahrzustand dann erkannt wird, wenn eine oder mehrere der folgenden Bedingungen erfüllt sind:

- Ein Betrag einer Beschleunigungsanforderung des Fahrers liegt in einem vorgegebenen Beschleunigungsintervall, wobei insbesondere entweder eine Gaspedalbetätigung oder eine Bremsbetätigung durch den Fahrer einen vorgegebenen Schwellenwert überschreiten.

Somit ist sichergestellt, dass eine merkliche Antriebs- oder Brems-Beschleunigung des Fahrzeugs erfolgt.

- Eine Fahrgeschwindigkeit des fahrenden Kraftfahrzeugs liegt in einem vorgegebenen Geschwindigkeitsintervall.

Hierbei kann das Intervall einen Stillstand oder eine vorgegebene Mindestgeschwindigkeit des Fahrzeugs als untere Grenze bzw. unteren Schwellenwert aufweisen, während eine obere Grenze zweckmäßigerweise zwischen 50 km/h und 100km/h liegt.

- Ein Betrag eines vom Fahrer eingestellten Lenkwinkels liegt unterhalb eines vorgegebenen Lenkschwellenwerts und/oder ein Betrag einer gemessenen Gierrate liegt unterhalb eines vorgegebenen Gierratenschwellenwerts.
- Ein Betrag einer gemessenen Querbeschleunigung liegt unterhalb eines vorgegebenen Kurvenschwellenwerts

Dadurch werden Fahrsituationen ausgeschlossen, in denen eine deutliche Querdynamik oder Lenkbewegungen durch den Fahrer die Auswertung verfälschen können.

- Eine zeitliche Änderung des Antriebssignals unterschreitet einen vorgegebenen Antriebsschwellenwert.
- Der Betrag des Längsbeschleunigungssignals überschreitet einen vorgegebenen Mindestschwellenwert.
- Es ist weder eine Fahrdynamikregelung noch eine Bremsschlupfregelung aktiv.

Somit ist sichergestellt, dass eine definierte und gut auszuwertende Fahrsituation vorliegt.

Es ist vorteilhaft, wenn die Auswertung der Kräftebilanz der Längsdynamik eine Ermittlung einer auf das Fahrzeug wirkenden Längskraft anhand des Antriebs- und/oder Bremssignals umfasst, wobei insbesondere auch eine Windwiderstandskraft anhand einer Fahrgeschwindigkeit des Fahrzeugs ermittelt und berücksichtigt wird.

Besonders vorteilhaft ist es, wenn während eines Beschleunigungsvorgangs anhand des Längsbeschleunigungssignals eine erste Längsbeschleunigung $a_{acc}$ und zumindest anhand des Antriebssignals eine erste Längskraft $F_{acc}$ ermittelt wird, und wenn während eines Bremsvorgangs anhand des Längsbeschleunigungssignals eine zweite Längsbeschleunigung $a_{dec}$ und zumindest anhand des Bremssignals eine zweite Längskraft $F_{dec}$ ermittelt wird, wobei die additive Verschiebung $a_x^{drift}$ des Längsbeschleunigungssignals gemäß

$$a_x^{drift} = \frac{a_{acc}\, F_{dec} - a_{dec}\, F_{acc}}{F_{dec} - F_{acc}}$$

ermittelt wird. Hierbei kann es ganz besonders vorteilhafterweise vorgesehen sein, die Sensorsignale und/oder Zwischengrößen während einer Anzahl von Brems- bzw. Beschleunigungsvorgängen zu erfassen und jeweils einen Mittelwert zu berechnen, um anhand dieser gemittelten Größen die additive Verschiebung zu ermitteln. Somit kann die additive Verschiebung direkt berechnet werden.

Weiterhin ist es besonders vorteilhaft, wenn eine Erfassung der Sensorsignale fortlaufend erfolgt, insbesondere in festen Zeitabständen, wobei anhand der bei Beschleunigungsvorgängen gemessenen Signale eine erste Masse ermittelt wird und anhand der bei Bremsvorgängen gemessenen Signale eine zweite Masse ermittelt wird, und wobei vorzugsweise eine Ermittlung der additiven Verschiebung des Längsbeschleunigungssignals dann erfolgt, wenn die Differenz zwischen der ersten Masse und der zweiten Masse einen vorgegebenen Toleranzschwellenwert überschreitet. Somit werden die Sensorsignale fortlaufend erfasst und vorzugsweise anhand eines Vergleichs der geschätzten Massen bei Brems- bzw. Beschleunigungsvorgängen überprüft, ob eine Korrektur erforderlich ist bzw. eine deutliche additive Verschiebung vorliegt.

Alternativ oder ergänzend zu einer direkten Berechnung kann die Ermittlung der additiven Verschiebung rekursiv erfolgen, wobei eine Vielzahl von ersten Massenwerten und zweiten Massenwerten ermittelt und ein Erwartungswert für die erste Masse und ein Erwartungswert für die zweite Masse berechnet werden, und wobei die Differenz zwischen dem ersten Erwartungswert für die erste Masse und dem Erwartungswert für die zweite Masse minimiert wird, wobei insbesondere die ermittelte additive Verschiebung beibehalten und nicht erneut ermittelt wird, wenn die Differenz zwischen den Erwartungswerten einen Abbruchschwellenwert unterschreitet. Hierbei kann ein Optimierungsverfahren eingesetzt werden, welches einen oder mehrere Parameter eines bekannten funktionellen Zusammenhangs derart anpasst, dass eine Kostenfunktion minimal wird. Beispielsweise kann ein an sich bekanntes Least-Squares-Verfahren eingesetzt werden, bei dem die kleinste quadratische Abweichung bzw. eine möglichst geringe Summe der Quadrate der Abweichungen zwischen Messwerten und angepassten Schätzwerten angestrebt wird. Diese stochastische Vorgehensweise hat den Vorteil, dass ein zuverlässiger Wert für die additive Verschiebung ermittelt wird und zusätzlich eine Gütegröße, wie eine Varianz oder ein Konfidenzintervall, angegeben werden kann. Indem die stochastischen Schätzvorgänge vorzugsweise rekursiv durchgeführt werden, wird nur ein begrenzter Speicherplatz benötigt. Durch statistische Tests kann eine Robustheit gegenüber einzelnen Ausreißern, d.h. stark abweichenden zufälligen Rohmassenwerten, gewährleistet werden. Insbesondere kann eine direkt berechnete additive Verschiebung als Startwert einer Optimierung genutzt werden.

Zweckmäßigerweise wird das Geschwindigkeitssignal anhand mindestens eines Raddrehzahlsensors bestimmt und/oder das Bremssignal anhand eines Bremsdrucksensors und/oder eines Pedalwegsensors am Bremspedal bestimmt und/oder das Antriebssignal aus einem von einem Motorsteuergerät einer Verbrennungskraftmaschine und/oder eines elektrischen Antriebs gemeldeten Antriebsmoment und/oder einer an einer Motorwelle gemessenen Drehzahl bestimmt.

Die Erfindung betrifft ferner ein elektronisches Steuergerät, insbesondere für ein Bremssystem eines Kraftfahrzeugs, mit Schnittstellen für den Anschluss mindestens eines Raddrehzahlsensors, mindestens eines Bremsbetätigungssensors, mindestens eines in Längsrichtung angeordneten Inertialsensors und einer Schnittstelle zu einem Fahrzeugdatenbus, welches eine Recheneinheit umfasst, die ein erfindungsgemäßes Verfahren durchführt.

Bevorzugt umfasst das elektronische Steuergerät einen Aktuator zum fahrerunabhängigen Aufbau von Bremskraft an einem oder mehreren Fahrzeugrädern, insbesondere eine elektrisch betriebene Hydraulikpumpe und mindestens ein Magnetventil, sowie eine Recheneinheit, die eine Fahrdynamikregelung ausführt, wobei der Fahrdynamikregelung ein um die additive Verschiebung korrigiertes Längsbeschleunigungssignal zugeführt wird. Bei der Fahrdynamikregelung kann es sich um eine Giermomentenregelung zur Beibehaltung des vom Fahrer vorgegebenen Kurses, eine Überrollverhinderung zur Vermeidung eines Kippens um die Längsachse des Fahrzeugs, eine Anhängerstabilisierung, eine Brems- oder Antriebsschlupfregelung oder eine Berganfahrhilfe handeln.

Weitere bevorzugte Ausführungsformen ergeben sich aus den Unteransprüchen und der nachfolgenden Beschreibung eines Ausführungsbeispiels an Hand von Figuren.

Es zeigen

Fig. 1    eine schematische Darstellung von auf das Fahrzeug wirkenden Kräften,

Fig. 2    eine schematische Struktur eines rekursiven Schätzverfahrens zur Ermittlung eines Längsbeschleunigungssensoroffsets, und

Fig. 3    eine schematische Darstellung von Massenverteilungen während einer sukzessiven Offsetkorrektur des Längsbeschleunigungssensorsignals.

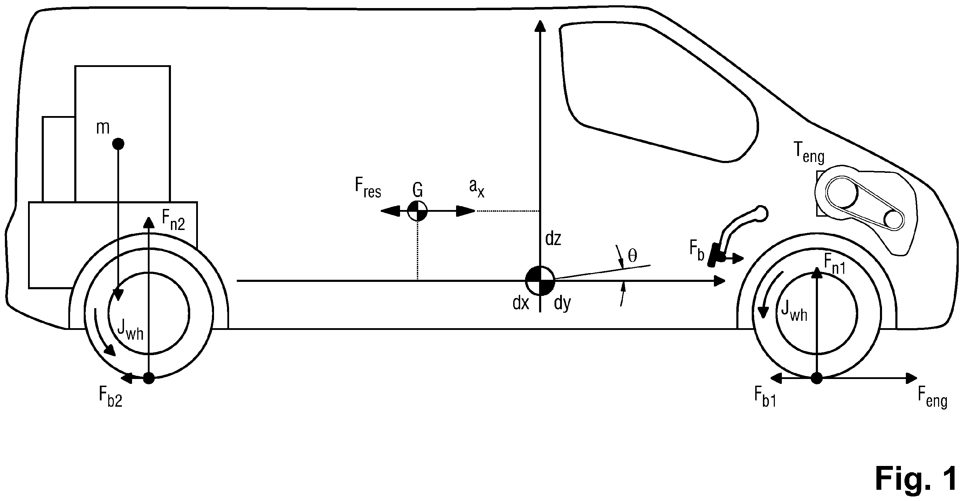

Fig. 1 zeigt eine seitliche Darstellung eines beispielgemäßen Fahrzeugs, wobei die wirkenden Kräfte und der Einfluss einer asymmetrischen Beladung schematisch dargestellt sind.

Das Motormoment $T_{eng}$ des Antriebsmotors, z.B. einer Verbrennungskraftmaschine, wird in diesem Beispiel über die Räder der Vorderachse übertragen und bewirkt eine antreibende Kraft $F_{eng}$ auf das Fahrzeug. Durch die Trägheitsmomente $J_{wh}$ der Räder ist angedeutet, dass ein Teil der vom Antriebsmotor aufgebrachten Leistung auch in Rotationsenergie von Rädern und Antriebsstrang umgesetzt wird. Berücksichtigt man die wirkenden abbremsenden Kräfte bzw. Fahrwiderstände, wie Rollwiderstand und Windwiderstand, so kann aus der Differenz von antreibender Kraft und abbremsenden Kräften eine beschleunigende Kraft $F_{acc}$ berechnet werden, die eine Zunahme $\dot{v}_x > 0$ der Längsgeschwindigkeit $v_x$ des Fahrzeugs bewirkt:

4

$$F_{acc} = m_{Fzg} \cdot \dot{v}_x$$

Hierbei werden zunächst vereinfachend eine Fahrt auf ebener Strecke und eine Kenntnis der Fahrzeugmasse $m_{Fzg}$ vorausgesetzt.

Wenn der Fahrer das Bremspedal mit einer bestimmten Kraft $F_b$ betätigt, so wird durch das Bremssystem eine (typischerweise gegenüber der Betätigungskraft verstärkte) Bremskraft $F_{brk} = F_{b1} + F_{b2}$ auf das Fahrzeug ausgeübt, die sich gemäß der installierten Bremskraftverteilung auf die Kraft $F_{b1}$ an der Vorderachse und $F_{b2}$ an der Hinterachse verteilt. Entsprechend kann unter Berücksichtigung einer eventuell wirkenden Kraft des Antriebsmotors und der das Fahrzeug zusätzlich abbremsenden Fahrwiderstände eine verzögernde Kraft $F_{dec}$ berechnet werden, die eine Abnahme $\dot{v}_x < 0$ der Längsgeschwindigkeit $v_x$ des Fahrzeugs bewirkt:

$$F_{dec} = m_{Fzg} \cdot \dot{v}_x$$

Im gezeigten Beispiel ist eine Ladung mit der Masse **m** hinten im Fahrzeug verstaut worden, weshalb die Aufstandskraft $F_{n2}$ der Hinterachse stärker zugenommen hat als die Aufstandskraft $F_{n1}$ der Vorderachse. Der Schwerpunkt **G** ist gegenüber dem unbeladenen Fahrzeug um *dx* verschoben. Dies führt dazu, dass die Fahrzeuglängsachse unter einem Winkel θ zur Fahrbahnlängsachse steht. Somit entspricht eine von einem fahrzeugfest montierten Sensor gemessene Längsbeschleunigung nicht mehr der Beschleunigungskraft, sondern das Sensorsignal weist ein Offset bzw. eine additive Verschiebung auf. Weiterhin ist angedeutet, dass der Schwerpunkt gegenüber dem unbeladenen Fahrzeug um **dz** nach oben verschoben ist. Dieser höhere Schwerpunkt führt dazu, dass ein Umkippen um die Längsachse bereits bei einer gegenüber dem unbeladenen Fahrzeug geringeren Querbeschleunigung erfolgen kann.

Die durch die Schwerpunktverlagerung **dx** verursachte additive Verschiebung im gemessenen Längsbeschleunigungssignal kann beispielsweise bei Beladung im vorderen Bereich des Laderaums ein negatives Offset verursachen, welches während eines Beschleunigungsvorgangs zu einer Überschätzung der Masse führen könnte. Wenn die Beladung im hinteren Bereich des Laderaums platziert ist, so entsteht ein positives Offset des Beschleunigungssignals, welches während eines Beschleunigungsvorgangs zur Unterschätzung der Masse führen könnte. Neben dem Einfluss ungleichmäßiger Beladung kann auch eine starke Temperaturänderung des Sensors ein Offset auf dem Beschleunigungssensorsignal verursachen. Der gemessene Beschleunigungswert setzt sich demnach zusammen aus

$$a_x^{Sensor}(k) = \underbrace{\dot{v}_x(k) + \sin(\gamma(k)) \cdot g}_{a_x^{true}(k)} + a_x^{drift} \quad (1)$$

wobei

$a_x^{Sensor}(k)$ den gemessenen Sensorwert,

$\dot{v}_x(k)$ die Ableitung der Fahrzeuglängsgeschwindigkeit,

$\gamma(k)$ den Straßensteigungswinkel,

$g$ die konstante Erdbeschleunigung,

$a_x^{drift}$ die additiven Verschiebung bzw. das Offset des Beschleunigungssensorsignals und

$a_x^{true}(k)$ den offsetfreien Beschleunigungssensorwert bezeichnen. Zeitlich veränderliche Größen bzw. aufeinander folgende Messwerte sind hierbei mit dem Index *k* bezeichnet, der also die jeweilige Zeit angibt.

Sofern die beiden Bedingungen erfüllt sind, dass 1.) das Fahrzeug in Stillstand ($\dot{v}_x = 0$) ist und 2.) die Straße keine Steigung ($\gamma = $ **0**) hat, könnte der Sensoroffsetwert $a_x^{drift}$ prinzipiell durch Messung von $a_x^{Sensor}$ ermittelt werden. Für die Überprüfung, ob die zweite Bedingung einer steigungsfreien Straße erfüllt ist, wäre aber entweder ein unabhängiger Sensor zur Messung eines Straßensteigungswinkels oder eine Überprüfung der folgenden Bedingungen nötig, dass i.) keine Bremse betätigt wird, ii.) das Fahrzeug nicht angetrieben wird und iii.) das Fahrzeug nicht rollt. Da aus Kostengründen die meisten Fahrzeuge über keinen unabhängigen Steigungswinkelsensor verfügen, und bei vielen Fahrzeugen, insbesondere bei Fahrzeugen mit Automatikgetrieben, die Bedingungen i.) und ii.), dass keine Bremse betätigt wird und dass das Fahrzeug nicht angetrieben wird, durchgehend nicht erfüllt sind, erfolgt die Ermittlung der additiven Verschiebung zweckmäßigerweise während der Fahrt.

Bevorzugt wird das erfindungsgemäße Verfahren von einem elektronischen Steuergerät eines Bremssystems des Kraftfahrzeugs ausgeführt, da dieses vielfach bereits eine Fahrdynamikregelung und/oder eine Bremsschlupfregelung bereitstellt und somit zweckmäßigerweise eine oder mehrere Recheneinheiten, insbesondere einen kernredundanten Mikrocontroller, Auswerteschaltungen für Signale angeschlossener Sensoren sowie ein oder mehrere mit einem Fahrzeugdatenbus wie CAN oder FlexRay verbundene Schnittstellen aufweist. Hierbei werden zweckmäßigerweise nur Signale von bereits im Fahrzeug vorhandenen Sensoren erfasst und/oder Informationen wie ein Antriebssignal der Motorsteuerung über den CAN-Bus ausgelesen. Beispielsweise über einen mit der Motorsteuerung verbundenen Sensor an der Kurbelwelle kann die Motordrehzahl ermittelt werden, und über einen Vergleich mit der Raddrehzahl das Übersetzungsverhältnis bzw. der eingelegte Gang bestimmt werden.

Das elektronische Steuergerät ist vorzugsweise mit je einem Rad zugeordneten Raddrehzahlsensoren an allen Rädern verbunden, die ein Geschwindigkeitssignal liefern. Aus den Geschwindigkeitssignalen der z.B. 4 Raddrehzahlsensoren kann eine Fahrzeuggeschwindigkeit und eine (insbesondere gemittelte) Radbeschleunigung ermittelt werden. Eine Bremsbetätigung durch den Fahrer kann bei einem hydraulischen Bremssystem anhand des Drucks im Hauptbremszylinder erkannt werden, alternativ oder ergänzend kann auch das Signal eines Bremspedalwinkelsensors oder eines Betätigungswegsensors betrachtet werden. Weiterhin weist das elektronische Steuergerät zweckmäßigerweise einen Querbeschleunigungssensor und/oder einen Gierratensensor auf oder ist mit diesen verbunden. Der Längsbeschleunigungssensor ist als ein Inertial- bzw. Trägheitssensor ausgeführt, der eine beweglich gelagerte Prüfmasse umfasst und insbesondere als mikro-elektro-mechanisches System realisiert ist.

Prinzipiell kann die additive Verschiebung aus dem Vergleich eines Bremsvorgangs mit einem Beschleunigungsvorgang ermittelt werden, wie im Folgenden kurz erläutert wird. Für die ermittelte Masse $m_{acc}$ während eines Beschleunigungsvorgangs gilt nach Kompensation der additiven Verschiebung folgende Formel:

$$m_{acc} = \frac{F_{acc}}{a_{acc} - a_x^{drift}}$$

Entsprechend gilt nach Kompensation für die ermittelte Masse $m_{dec}$ während eines Bremsvorgangs:

$$m_{dec} = \frac{F_{dec}}{a_{dec} - a_x^{drift}}$$

Da die Masse eines Fahrzeugs während einer Fahrt (bis auf eine hier vernachlässigte Abnahme der Tankfüllung) gleichbleibt, muss weiterhin gelten:

$$m_{acc} = m_{dec}$$

Somit kann man das Offset des Beschleunigungssensors gemäß folgender Formel berechnen:

$$a_x^{drift} = \frac{a_{acc} \cdot F_{dec} - a_{dec} \cdot F_{acc}}{F_{dec} - F_{acc}} \quad (2)$$

Es ist vorteilhaft, wenn die Berechnung der additiven Verschiebung anhand einer Betrachtung mehrerer Brems- und Antriebsvorgänge erfolgt. Für ein genaues und zuverlässiges Ergebnis ist es hierbei erforderlich, dass eine gleichwertige Repräsentativität an Samples aus den beiden Gruppen (Beschleunigung und Bremsung) vorliegt, beispielsweise die Anzahl der Bremsvorgänge der Anzahl der Beschleunigungsvorgänge entspricht, wobei im Sinne einer hinreichenden statistischen Güte beispielsweise überprüft werden kann, dass die Anzahl der betrachten Brems- bzw. Beschleunigungsvorgänge einen vorgegebenen Schwellenwert übersteigt. Damit eine sinnvolle additive Verschiebung ermittelt werden kann, darf $a_x^{drift}$ sich nicht während des Schätzvorgangs ändern, weshalb insbesondere sichergestellt sein sollte, dass die Beladung im Laderaum derart angeordnet ist und/oder eine aktive Befestigung der Ladung im Laderaum erfolgt, so dass bei Brems- und Beschleunigungsvorgängen die Ladung in derselben Lage bleibt und nicht hin- und her rutscht.

Alternativ oder in Kombination mit der Berechnung gemäß Formel (2), welche für ein korrektes Ergebnis auf anhand einer Vielzahl von Rohmassenwerten bei Brems- und Beschleunigungsvorgängen ermittelte Fahrzeugmassen $m_{dec}$ und $m_{acc}$ basieren sollte, welche erst nach einer gewissen Fahrtdauer zur Verfügung stehen, kann auch eine rekursive Ermittlung bzw. eine sukzessive Approximation der additiven Verschiebung erfolgen.

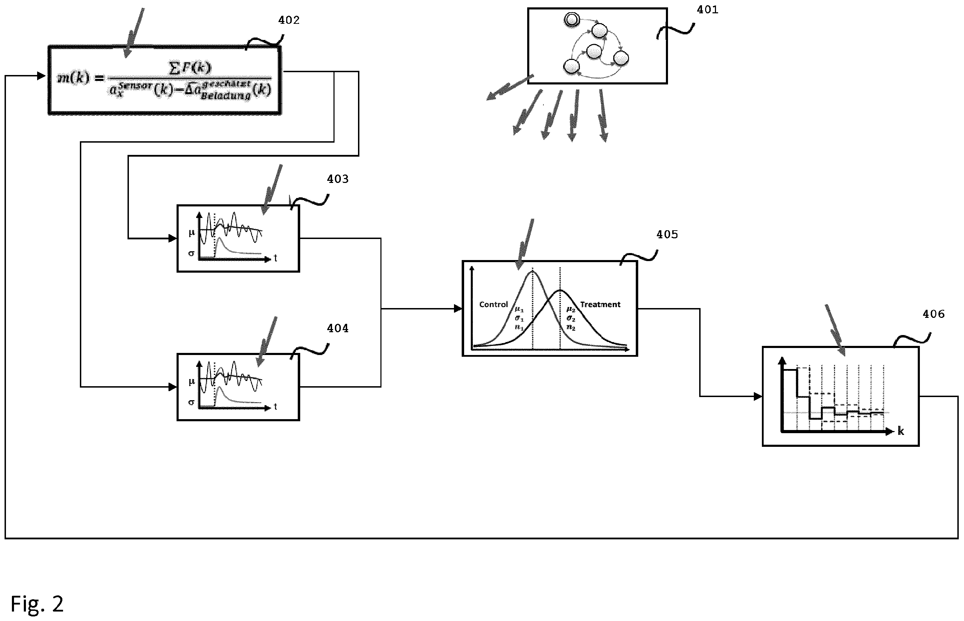

Fig. 2 zeigt eine schematische Struktur eines rekursiven Schätzverfahrens zur Ermittlung eines Längsbeschleunigungssensoroffsets. Einzelne Module können hierbei als einzelne Verfahrensschritte interpretiert werden. Dem Schätzer werden die Signale von im Fahrzeug vorhandenen Sensoren und/oder Informationen von elektronischen Steuergeräten wie Motormoment und/oder Beschleunigungssensorsignal und/oder Fahrzeuggeschwindigkeit und/oder Vordruck bzw. Druck im Hauptbremszylinder und/oder Pedalweg und/oder Gierrate sowie die gemessene Längsbeschleunigung zugeführt.

Modul 401 dient der Koordination des Lernens und ist zweckmäßigerweise als Zustandsmaschine ausgeführt. Dieses Modul kann den Beginn und das Ende der Ermittlung von Rohmassenwerten und den Beginn einer statistischen Auswertung der Rohmassenwerte vorgeben und auch eine erneute Initialisierung vornehmen. Zu diesem Zweck kann es Signale an die anderen Module senden, die in der Figur durch Pfeile angedeutet sind. Zweckmäßigerweise umfasst dieses Modul auch eine A-priori Auswertung der Sensorsignale, bei der anhand verschiedener Kriterien überprüft wird, ob eine geeigneter Beschleunigungs- oder Bremsvorgang vorliegt. Insbesondere sollte kein Eingriff einer Fahrdynamikregelung oder einer Bremsschlupfregelung erfolgen, die Fahrgeschwindigkeit sollte in einem vorgegebenen Intervall mittlerer Geschwindigkeiten liegen, das Antriebsmoment sollte innerhalb einer vorgegebenen Genauigkeit auch während Bremsvorgängen konstant sein, vorteilhafterweise sollte das Übersetzungsverhältnis des Getriebes (bzw. der eingelegte Gang) nicht zu hoch und konstant sein, und es sollte eine Geradeausfahrt auf einer Fahrbahn mit einer nicht zu hohen Steigung vorliegen. Es kann vorgesehen sein, dass zusätzlich oder alternativ eine Bewertung mittels Fuzzy-Klassifikatoren erfolgt. Bei Erfüllung einer oder mehrerer, vorzugsweise aller Bedingungen und wenn zusätzlich die Brems- oder Antriebsbeschleunigung betragsmäßig in einem vorgegebenen Intervall liegt, wird eine Lernphase erkannt bzw. gestartet.

Modul 402 dient der Rohmassenschätzung, wobei zu jedem Abtastzeitpunkt, an dem neue Sensorsignale vorliegen, die Kräftebilanz in Längsrichtung ausgewertet und ein Rohmassenwert $\hat{m}(k)$ gemäß folgender Formel berechnet wird:

$$\hat{m}(k) = \frac{\sum F(k)}{a_x^{Sensor}(k) - \hat{a}_x^{drift}(k)} \quad (3)$$

Hierbei bezeichnen

$\hat{m}(k)$ den berechneten Rohmassenwert zu einem Zeitpunkt $k$,

$\sum F(k)$ die Summe der in der longitudinalen Richtung ermittelten Kräfte zu dem Zeitpunkt $k$, welche u.a. anhand von Motormoment und Bremsdrücken berechnet wird, und

$\hat{a}_x^{drift}(k)$ den zur dem Zeitpunkt $k$ durch das Verfahren geschätzten Wert des wahren Beschleunigungssensoroffsets $a_x^{drift}$.

Anhand des Einsetzens von Formel (1) in Formel (3),

$$\hat{m}(k) = \frac{\sum F(k)}{a_x^{true}(k) + a_x^{drift} - \hat{a}_x^{drift}(k)}$$

ist es ersichtlich, dass das Ziel der Schätzung darin besteht, die Auswirkung der additiven Verschiebung $a_x^{drift}$ durch eine Korrekturkonstante $\hat{a}_x^{drift}(k)$ zu kompensieren.

Unkompensiert bewirkt $a_x^{drift}$ eine Abweichung $\Delta m$ zur gesuchten Masse $m(k)$ :

$$\hat{m}(k) = m(k) + \Delta m\left(\hat{a}_x^{drift}(k)\right)$$

Das Vorzeichen der gemittelten Abweichung $E\left\{\Delta m\left(\hat{a}_x^{drift}(k)\right)\right\}$ ohne Kompensation, also bei $\hat{a}_x^{drift}(k) = 0$ , ist bei einem gleichbleibenden Offset von der Fahrsituation abhängig, wie es aus der folgenden Tabelle zu entnehmen ist:

| | $a_x^{Sensor}(k) > 0$ Beschleunigung: | $a_x^{Sensor}(k) < 0$ Bremsung: |
|---|---|---|
| $a_x^{drift} > 0$ (z.B. Beladung hinten) | $E\left\{\Delta m\left(\hat{a}_x^{drift}(k)\right)\right\} > 0$ | $E\left\{\Delta m\left(\hat{a}_x^{drift}(k)\right)\right\} < 0$ |
| $a_x^{drift} < 0$ (z.B. Beladung vorne) | $E\left\{\Delta m\left(\hat{a}_x^{drift}(k)\right)\right\} < 0$ | $E\left\{\Delta m\left(\hat{a}_x^{drift}(k)\right)\right\} > 0$ |

Findet eine Kompensation der additiven Verschiebung statt, so strebt die gemittelte Abweichung $E\{\Delta m\}$ unabhängig von Beschleunigung und Bremsung in jeder Zeile der Tabelle gegen null.

Somit kann die additive Verschiebung im Prinzip anhand des folgenden Optimierungsproblems ermittelt werden:

$$\min_{\hat{a}_x^{drift}} \left\| E\left\{\Delta m\left(\hat{a}_x^{drift}\right)\right\} \right\|$$

Da $m(k)$ unbekannt ist, kann dieses Optimierungsproblem nicht direkt bearbeitet werden. Aufgrund der Berechenbarkeit von $\hat{m}(k)$ wird stattdessen das folgende analoge Optimierungsproblem betrachtet:

$$\min_{\hat{a}_x^{drift}} \left\| E\left\{\hat{m}|dec, \hat{a}_x^{drift}\right\} - E\left\{\hat{m}|acc, \hat{a}_x^{drift}\right\} \right\| \quad (4)$$

Zum Lösen des Optimierungsproblems von (4) teilt das vorliegende Verfahren die in Modul 402 berechneten offsetbehaftete Rohmassenwerte in zwei Gruppen auf - eine Gruppe für Rohmassenwerte $\hat{m}|acc$ aus Beschleunigungsphasen und eine Gruppe für Rohmassenwerte $\hat{m}|dec$ aus Bremsphasen.

In Modul 403 werden die statistischen Eigenschaften der während Bremsvorgängen ermittelten Rohmassenwerte $\hat{m}_{dec}$ betrachtet, wobei insbesondere der gewichtete Mittelwert $\mu$, die gewichtete Varianz $\sigma^2$ oder gewichtete Standardabweichung $\sigma$ ausgegeben werden.

Entsprechend werden in Modul 404 die statistischen Eigenschaften der während Beschleunigungsvorgängen ermittelten Rohmassenwerte $\hat{m}_{acc}$ betrachtet, wobei eine (insbesondere rekursive) Berechnung der statistischen Momente wie dem gewichteten Mittelwert $\mu$, der gewichtete Varianz $\sigma^2$ oder der gewichteten Standardabweichung $\sigma$ erfolgt.

Mit Hilfe eines statistischen Tests, vorzugsweise eines Hypothesentests, wird in Modul 405 zum einen überprüft, ob die Repräsentativität der Stichproben gewährleistet sind, und zum anderen mittels der Nullhypothese festgestellt, ob die Erwartungswerte der beiden Gruppen zur einer bestimmten Signifikanz identisch sind. Falls die Nullhypothese zu einem angegebenen Signifikanzlevel verworfen wird, bedeutet dies, dass zu dem Signifikanzlevel ein Anteil des Offsets $a_x^{drift}$ noch nicht kompensiert ist. Auf diese Weise werden schlechtere Kandidaten an Offsetwerten verworfen.

Modul 406 führt anhand der Rohmassenwerte und des statistischen Tests ein Optimierungsverfahren durch, wobei sowohl Grid-basierte Verfahren als auch Gradientenverfahren zwecks methodischen Trial-and-Errors angewandt werden können.

Grid-basierten Verfahren zielen auf das Erreichen eines globalen Optimum von $\hat{a}_x^{drift}$. Hierfür werden im regelmäßigen Abstand mögliche Werte $\left(\hat{a}_x^{drift}\right)_i$ von $a_x^{drift}$ verteilt. Für jeden dieser Werte wird $\left\| E_i\left\{\hat{m}|gebremst, \left(\hat{a}_x^{drift}\right)_i\right\} - E_i\left\{\hat{m}|beschleunigt, \left(\hat{a}_x^{drift}\right)_i\right\} \right\|$ berechnet, wobei der Wert von $\hat{a}_x^{drift}$ ermittelt wird, welcher die kleinste betragsmäßige Abweichung aufweist.

Gradientenverfahren zielen auf das Erreichen eines lokalen Optimums von $\hat{a}_x^{drift}$. Hierbei wird iterativ eine Offsetschätzung $\hat{a}_x^{drift}(k)$ ermittelt, bis die Verbesserung eines Schrittes eine Schwelle unterschreitet.

Sowohl Grid-basierte Verfahren als auch Gradientenverfahren können rekursiv ausgelegt werden, um Hardwareressourcen zu sparen.

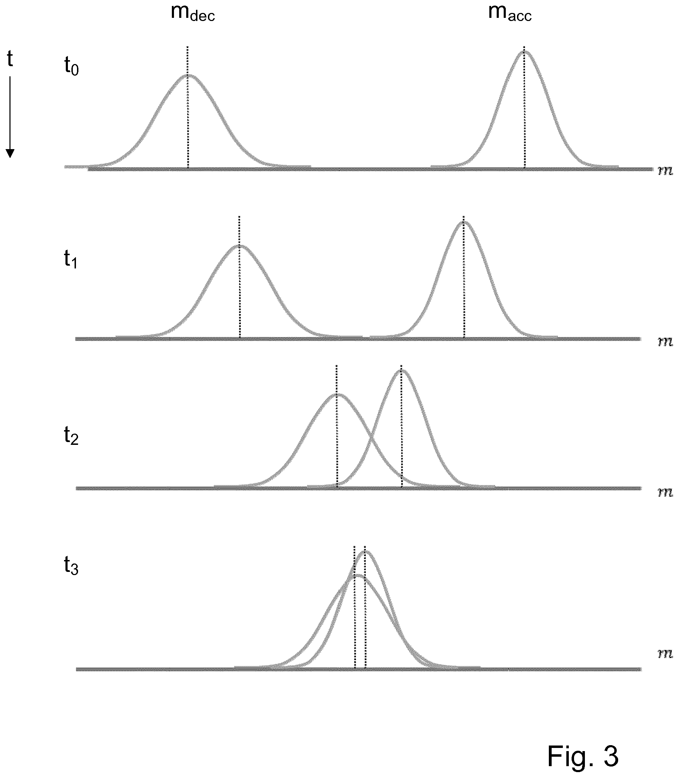

Fig. 3 zeigt eine schematische Darstellung von Massenverteilungen während einer sukzessiven Offsetkorrektur des Längsbeschleunigungssensorsignals. In diesem Beispiel ist eine Beladung im hinteren Laderaumbereich platziert. Hierbei sind Diagramme mit geschätzten Fahrzeugmassen zu aufeinander folgenden Zeitpunkten t gezeigt, wobei $m_{dec}$ eine während eines Bremsvorgangs geschätzte Masse und $m_{acc}$ eine während eines Beschleunigungsvorgangs geschätzte Masse bezeichnet. Eine endliche Anzahl von Berechnungen bzw. Rohmassenwerten würde nur eine grobe Annäherung an die gezeigten kontinuierlichen Massenverteilungen ermöglichen.

Aus einer Vielzahl von Massenwertberechnungen würde man also zu einem Zeitpunkt $t_0$ die gezeigten Massenverteilungen erhalten, welche eine mittlere Masse bzw. einen Erwartungswert $E\{m_{dec}\}$ für die geschätzte Masse aus einer Betrachtung von Bremsvorgängen und eine mittlere Masse bzw. einen Erwartungswert $E\{m_{acc}\}$ für die geschätzte Masse aus einer Betrachtung von Beschleunigungsvorgängen ergibt. Da der durch die Beladung verursachte Offset und/oder ein temperaturbedingter Offset noch nicht ermittelt bzw. kompensiert wurde, zeigt sich eine deutliche Abweichung zwischen den Erwartungswerte bzw. mittleren Massen für Brems- und Beschleunigungsvorgänge.

Basierend auf Formel (2) oder einem Optimierungsverfahren bzw. einer Betrachtung der Abweichung kann eine additive Verschiebung ermittelt und somit kompensiert werden, wobei zu einem späteren Zeitpunkt $t_1 > t_0$ die Erwartungswerte bzw. Massenverteilungen eine verringerte Abweichung zeigen.

Entsprechend wird in einem nächsten Schritt ein neuer bzw. genauerer Schätzwert für die additive Verschiebung ermittelt, woraufhin zu einem späteren Zeitpunkt $t_2 > t_1$ die Erwartungswerte bzw. Massenverteilungen eine weiter verringerte Abweichung zeigen.

Nach einem weiteren Schritt in der Ermittlung der additiven Verschiebung, zu einem späteren Zeitpunkt $t_3 > t_2$ weichen die Massenverteilungen um weniger als ihre Halbwertsbreite (oder der Varianz oder ein anderes vorgegebenes Maß für die Breite der Massenverteilung) voneinander ab. Die additive Verschiebung wurde hinreichend genau ermittelt und kann für die Dauer der Fahrt kompensiert werden.

## Patentansprüche

1. Verfahren, bei dem eine additive Verschiebung eines von einem Inertialsensor gemessenen Längsbeschleunigungssignals eines fahrenden Kraftfahrzeugs ermittelt wird, wobei zumindest das Längsbeschleunigungssignal, ein Bremssignal und ein Antriebssignal erfasst werden, und wobei eine Kräftebilanz der Längsdynamik des Kraftfahrzeugs ausgewertet wird, wobei die Signale sowohl bei mindestens einem Beschleunigungs- als auch bei mindestens einem Bremsvorgang erfasst werden, wobei die Signale bei Beschleunigungsvorgängen getrennt von den Signalen bei Bremsvorgängen erfasst und/oder ausgewertet werden, **dadurch gekennzeichnet, dass** die additive Verschiebung aus einem Vergleich der bei Beschleunigungsvorgängen erfassten Signale oder daraus berechneten Werte mit den bei Bremsvorgängen erfassten Signalen oder daraus berechneten Werten ermittelt wird.

2. Verfahren nach Anspruch 1, **dadurch gekennzeichnet, dass** die Auswertung der Kräftebilanz der Längsdynamik nur dann erfolgt, wenn ein stabiler Fahrzustand, insbesondere eine Geradeausfahrt, erkannt wird.

3. Verfahren nach Anspruch 2, **dadurch gekennzeichnet, dass** der stabile Fahrzustand dann erkannt wird, wenn eine oder mehrere der folgenden Bedingungen erfüllt sind:

   • Ein Betrag einer Beschleunigungsanforderung des Fahrers liegt in einem vorgegebenen Beschleunigungsintervall, wobei insbesondere entweder eine Gaspedalbetätigung oder eine Bremsbetätigung durch den Fahrer einen vorgegebenen Schwellenwert überschreiten
   • Eine Fahrgeschwindigkeit des fahrenden Kraftfahrzeugs liegt in einem vorgegebenen Geschwindigkeitsintervall
   • Ein Betrag eines vom Fahrer eingestellten Lenkwinkels und/oder einer gemessene Gierrate liegt unterhalb eines vorgegebenen Lenkschwellenwerts und/oder eines vorgegebenen Gierratenschwellenwerts
   • Ein Betrag einer zeitlichen Änderung des Antriebs- oder Bremssignals unterschreitet einen vorgegebenen Schwankungsschwellenwert
   • Der Betrag des Längsbeschleunigungssignals überschreitet einen vorgegebenen Mindestschwellenwert
   • Ein Betrag einer gemessenen Querbeschleunigung liegt unterhalb eines vorgegebenen Kurvenschwellenwerts
   • Es ist weder eine Fahrdynamikregelung, noch eine Bremsschlupfregelung, noch eine Antriebsschlupfregelung aktiv

4. Verfahren nach mindestens einem der vorhergehenden Ansprüche, **dadurch gekennzeichnet, dass** die Auswertung der Kräftebilanz der Längsdynamik eine Ermittlung einer auf das Fahrzeug wirkenden Längskraft anhand des Antriebs- und/oder Bremssignals umfasst, wobei insbesondere auch eine Windwiderstandskraft anhand einer Fahrgeschwindigkeit des Fahrzeugs ermittelt und berücksichtigt wird.

5. Verfahren nach Anspruch 4, **dadurch gekennzeichnet, dass** während eines Beschleunigungsvorgangs anhand des Längsbeschleunigungssignals eine erste Längsbeschleunigung $a_{acc}$ und zumindest anhand des Antriebssignals eine erste Längskraft $F_{acc}$ ermittelt wird, dass während eines Bremsvorgangs anhand des Längsbeschleunigungssignals eine zweite Längsbeschleunigung $a_{dec}$ und zumindest anhand des Bremssignals eine zweite Längskraft $F_{dec}$ ermittelt wird, und dass die additive Verschiebung $a_x^{drift}$ des Längsbeschleunigungssignals gemäß

$$a_x^{drift} = \frac{a_{acc}\, F_{dec} - a_{dec}\, F_{acc}}{F_{dec} - F_{acc}}$$

ermittelt wird.

6. Verfahren nach Anspruch 4 oder 5, **dadurch gekennzeichnet, dass** eine Erfassung der Sensorsignale fortlaufend erfolgt, insbesondere in festen Zeitabständen, wobei anhand der bei Beschleunigungsvorgängen gemessenen Signale eine erste Masse ermittelt wird und anhand der bei Bremsvorgängen gemessenen Signale eine zweite Masse ermittelt wird, wobei vorzugsweise eine Ermittlung der additiven Verschiebung des Längsbeschleunigungssignals dann erfolgt, wenn die Differenz zwischen der ersten Masse und der zweiten Masse einen vorgegebenen Toleranzschwellenwert überschreitet.

7. Verfahren nach Anspruch 6, **dadurch gekennzeichnet, dass** die Ermittlung der additiven Verschiebung rekursiv erfolgt, wobei eine Vielzahl von ersten Massenwerten und zweiten Massenwerten ermittelt und ein Erwartungswert für die erste Masse und ein Erwartungswert für die zweite Masse berechnet werden, und wobei die Differenz zwischen dem ersten Erwartungswert für die erste Masse und dem Erwartungswert für die zweite Masse minimiert wird, wobei insbesondere die ermittelte additive Verschiebung beibehalten und nicht erneut ermittelt wird, wenn die Differenz zwischen den Erwartungswerten einen Abbruchschwellenwert unterschreitet.

8. Verfahren nach mindestens einem der vorhergehenden Ansprüche, **dadurch gekennzeichnet, dass** ein Geschwindigkeitssignal anhand mindestens eines Raddrehzahlsensors bestimmt wird und/oder das Bremssignal anhand eines Bremsdrucksensors und/oder eines Pedalwegsensors am Bremspedal bestimmt wird und/oder das Antriebssignal aus einem von einem Motorsteuergerät einer Verbrennungskraftmaschine und/oder eines elektrischen Antriebs gemeldeten Antriebsmoment und/oder einer an einer Motorwelle gemessenen Drehzahl bestimmt wird.

9. Elektronisches Steuergerät, insbesondere für ein Bremssystem eines Kraftfahrzeugs, umfassend Schnittstellen für den Anschluss mindestens eines Raddrehzahlsensors und mindestens eines Bremsbetätigungssensors, mindestens einen in Längsrichtung angeordneten Inertialsensor und eine Schnittstelle zu einem Fahrzeugdatenbus, **gekennzeichnet durch** eine Recheneinheit, welche ein Verfahren nach mindestens einem der vorhergehenden Ansprüche durchführt.

10. Elektronisches Steuergerät nach Anspruch 9, **dadurch gekennzeichnet, dass** dieses einen Aktuator zum fahrerunabhängigen Aufbau von Bremskraft an einem oder mehreren Fahrzeugrädern, insbesondere eine elektrisch betriebene Hydraulikpumpe und mindestens ein Magnetventil, sowie eine Recheneinheit umfasst, die eine Fahrdynamikregelung ausführt, wobei der Fahrdynamikregelung ein um die ermittelte additive Verschiebung korrigiertes Längsbeschleunigungssignal zugeführt wird.

**Claims**

1. Method with which an additive displacement of a longitudinal acceleration signal of a travelling motor vehicle measured by an inertial sensor is determined, wherein at least the longitudinal acceleration signal, a brake signal and a drive signal are detected, and wherein a balance of forces of the longitudinal dynamics of the motor vehicle is analysed, wherein the signals are detected both for at least one acceleration process and also for at least one braking process, wherein the signals for acceleration processes are detected and/or analysed separately from the signals for braking processes, **characterized in that** the additive displacement is determined from a comparison of the signals detected during acceleration processes or values calculated therefrom with the signals detected during braking processes or values calculated therefrom.

**2.** Method according to Claim 1, **characterized in that** the analysis of the balance of forces of the longitudinal dynamics is only carried out if a stable driving state, in particular travelling straight ahead, is detected.

**3.** Method according to Claim 2, **characterized in that** the stable driving state is detected if one or more of the following conditions are met:

- a magnitude of an acceleration demand by the driver lies within a predetermined acceleration interval, wherein in particular either a gas pedal operation or a brake operation by the driver exceeds a predetermined threshold value
- a speed of travel of the travelling motor vehicle lies within a predetermined speed interval
- a magnitude of a steering angle set by the driver and/or a measured yaw rate lies below a predetermined steering angle threshold value and/or a predetermined yaw rate threshold value
- a magnitude of a change with time of the drive or brake signal lies below a predetermined fluctuation threshold value
- the magnitude of the longitudinal acceleration signal exceeds a predetermined minimum threshold value
- a magnitude of a measured lateral acceleration lies below a predetermined turn threshold value
- none of drive dynamics control, brake slip control nor drive slip control is active.

**4.** Method according to at least one of the preceding claims, **characterized in that** the analysis of the balance of forces of the longitudinal dynamics includes a determination of a longitudinal force acting on the vehicle using the drive and/or brake signal, wherein in particular a wind resistance force is also determined and taken into account using a speed of travel of the vehicle.

**5.** Method according to Claim 4, **characterized in that** during an acceleration process a first longitudinal acceleration $a_{acc}$ is determined using the longitudinal acceleration signal and a first longitudinal force $F_{acc}$ is determined at least using the drive signal, **in that** during a braking process a second longitudinal acceleration $a_{dec}$ is determined using the longitudinal acceleration signal and a second longitudinal force $F_{dec}$ is determined at least using the brake signal, and **in that** the additive displacement $a_x^{drift}$ of the longitudinal acceleration signal is determined according to

$$a_x^{drift} = \frac{a_{acc}F_{dec} - a_{dec}F_{acc}}{F_{dec} - F_{acc}}.$$

**6.** Method according to Claim 4 or 5, **characterized in that** detection of the sensor signals is carried out continuously, in particular at fixed time intervals, wherein a first mass is determined using the signals measured during acceleration processes and a second mass is determined using the signals measured during braking processes, wherein a determination of the additive displacement of the longitudinal acceleration signal is preferably carried out if the difference between the first mass and the second mass exceeds a predetermined tolerance threshold value.

**7.** Method according to Claim 6, **characterized in that** the determination of the additive displacement is carried out recursively, wherein a number of first mass values and second mass values are determined and an expected value for the first mass and an expected value for the second mass are calculated, and wherein the difference between the first expected value for the first mass and the expected value for the second mass is minimized, wherein in particular the determined additive displacement is maintained and not re-determined if the difference between the expected values lies below a termination threshold.

**8.** Method according to at least one of the preceding claims, **characterized in that** a speed signal is determined using at least one wheel revolution rate sensor and/or the brake signal is determined using a brake pressure sensor and/or a pedal travel sensor on the brake pedal and/or the drive signal is determined from a drive torque signalled by an engine control unit of an internal combustion engine and/or by a engine control unit of an electrical drive and/or a revolution rate measured on a motor shaft.

**9.** Electronic control unit, in particular for a brake system of a motor vehicle, comprising interfaces for the connection of at least one wheel revolution rate sensor and at least one brake operation sensor, at least one inertial sensor disposed in the longitudinal direction and an interface to a vehicle data bus, **characterized by** a computing unit that carries out a method according to at least one of the preceding claims.

10. Electronic control unit according to Claim 9, **characterized in that** the electronic control unit comprises an actuator for building up a brake force on one or more vehicle wheels independently of the driver, in particular an electrically operated hydraulic pump and at least one solenoid valve, as well as a computing unit that implements drive dynamics control, wherein a longitudinal acceleration signal corrected by the determined additive displacement is fed into the drive dynamics control.

**Revendications**

1. Procédé, avec lequel un décalage additif d'un signal d'accélération longitudinale d'un véhicule automobile se déplaçant, mesuré par un capteur inertiel, est déterminé, au moins le signal d'accélération longitudinale, un signal de frein et un signal d'entraînement étant acquis, et un bilan des forces de la dynamique longitudinale du véhicule automobile étant interprété, les signaux étant acquis aussi bien lors d'au moins une opération d'accélération et lors d'au moins une opération de freinage, les signaux lors des opérations d'accélération étant acquis et/ou interprétés séparément des signaux lors des opérations de freinage,
   **caractérisé en ce que**
   le décalage additif est déterminé à partir d'une comparaison des signaux acquis lors des opérations d'accélération ou de valeurs calculées à partir de ceux-ci avec les signaux acquis lors des opérations de freinage ou de valeurs calculées à partir de ceux-ci.

2. Procédé selon la revendication 1, **caractérisé en ce que** l'interprétation du bilan des forces de la dynamique longitudinale n'est effectuée que lorsqu'un état de déplacement stable, notamment un déplacement en ligne droite, est reconnu.

3. Procédé selon la revendication 2, **caractérisé en ce que** l'état de déplacement stable est reconnu lorsque l'une ou plusieurs des conditions suivantes sont remplies :

   * une valeur absolue d'une demande d'accélération du conducteur se trouve dans un intervalle d'accélération prédéfini, un actionnement de la pédale d'accélérateur ou un actionnement du frein par le conducteur dépassant notamment une valeur de seuil prédéfinie,
   * une vitesse de déplacement du véhicule automobile se déplaçant se trouve dans un intervalle de vitesse prédéfini,
   * une valeur absolue d'un angle de braquage réglé par le conducteur et/ou d'un taux de lacet mesuré est inférieure à une valeur de seuil de braquage prédéfinie et/ou à une valeur de seuil de taux de lacet prédéfinie,
   * une valeur absolue d'une variation dans le temps du signal d'entraînement ou de freinage devient inférieure à une valeur de seuil de fluctuation prédéfinie,
   * la valeur absolue du signal d'accélération longitudinale dépasse une valeur de seuil minimale prédéfinie,
   * une valeur absolue d'une accélération transversale mesurée est inférieure à une valeur de seuil de virage prédéfinie,
   * ni une régulation dynamique de la conduite, ni une régulation du glissement de freinage, ni une régulation du glissement d'entraînement n'est active.

4. Procédé selon au moins l'une des revendications précédentes, **caractérisé en ce que** l'interprétation du bilan des forces de la dynamique longitudinale comprend une détermination d'une force longitudinale agissant sur le véhicule à l'aide du signal d'entraînement et/ou de freinage, une force de résistance au vent étant notamment aussi déterminée à l'aide d'une vitesse de déplacement du véhicule et prise en compte.

5. Procédé selon la revendication 4, **caractérisé en ce que** pendant une opération d'accélération, une première accélération longitudinale $a_{acc}$ est déterminée à l'aide du signal d'accélération longitudinale et une première force longitudinale $F_{acc}$ à l'aide du signal d'entraînement, **en ce que** pendant une opération de freinage, une deuxième accélération longitudinale $a_{dec}$ est déterminée à l'aide du signal d'accélération longitudinale et une deuxième force longitudinale $F_{dec}$ à l'aide du signal d'entraînement, et **en ce que** le décalage additif $a_x^{drift}$ du signal d'accélération longitudinale est déterminé conformément à

$$a_x^{drift} = \frac{a_{acc}F_{dec} - a_{dec}F_{acc}}{F_{dec} - F_{acc}}.$$

6. Procédé selon la revendication 4 ou 5, **caractérisé en ce qu'**une acquisition des signaux de capteur est effectuée en continu, notamment à des intervalles de temps fixes, une première masse étant déterminée à l'aide des signaux mesurés lors des opérations d'accélération et une deuxième masse étant déterminée à l'aide des signaux mesurés lors des opérations de freinage, une détermination du décalage additif étant de préférence réalisée lorsque la différence entre la première masse et la deuxième masse est supérieure à une valeur de seuil de tolérance prédéfinie.

7. Procédé selon la revendication 6, **caractérisé en ce que** la détermination du décalage additif est effectuée de manière récursive, une pluralité de premières valeurs de masse et de deuxièmes valeurs de masse étant déterminées et une valeur attendue pour la première masse et une valeur attendue pour la deuxième masse étant calculées, et la différence entre la première valeur attendue pour la première masse et la valeur attendue pour la deuxième masse étant réduite au minimum, le décalage additif déterminé étant notamment conservé et pas de nouveau déterminé lorsque la différence entre les valeurs attendues devient inférieure à une valeur de seuil d'interruption.

8. Procédé selon au moins l'une des revendications précédentes, **caractérisé en ce qu'**un signal de vitesse est déterminé à l'aide d'au moins un capteur de vitesse de rotation de roue et/ou le signal de freinage est déterminé à l'aide d'un capteur de pression de freinage et/ou d'un capteur de course de pédale au niveau de la pédale de frein et/ou le signal d'entraînement est déterminé à partir d'un couple d'entraînement signal par un contrôleur de moteur d'un moteur à combustion interne et/ou d'un mécanisme d'entraînement électrique et/ou d'une vitesse de rotation mesurée au niveau d'un arbre de moteur.

9. Contrôleur électronique, notamment pour un système de freinage d'un véhicule automobile, comprenant des interfaces pour le raccordement d'au moins un capteur de vitesse de rotation de roue et d'au moins un capteur d'actionnement de frein, au moins un capteur inertiel disposé dans la direction longitudinale et une interface vers un bus de données de véhicule, **caractérisé par** une unité de calcul qui met en œuvre un procédé selon au moins l'une des revendications précédentes.

10. Contrôleur électronique selon la revendication 9, **caractérisé en ce que** celui-ci comprend un actionneur destiné à établir indépendamment du conducteur une force de freinage au niveau d'une ou plusieurs roues de véhicule, notamment une pompe hydraulique à commande électrique et au moins une électrovanne, ainsi qu'une unité de calcul, laquelle exécute une régulation dynamique de la conduite, un signal d'accélération longitudinal corrigé du décalage additif déterminé étant acheminé à la régulation dynamique de la conduite.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006012246 A1
- WO 2005101031 A1
- DE 102005025851 B1
- EP 2535724 A1